(19) Europäisches Patentamt

European Patent Office

Office européen des brevets

(11) Publication number: **0 267 367 B1**

## (12) EUROPEAN PATENT SPECIFICATION

(45) Date of publication of patent specification:
22.05.91 Bulletin 91/21

(51) Int. Cl.⁵: **A01G 9/00**

(21) Application number: **87110169.7**

(22) Date of filing: **14.07.87**

(54) **Box for cultivating plant.**

(30) Priority: **23.10.86 JP 253152/86**

(43) Date of publication of application:
**18.05.88 Bulletin 88/20**

(45) Publication of the grant of the patent:
**22.05.91 Bulletin 91/21**

(84) Designated Contracting States:
**DE FR GB IT NL**

(56) References cited:
**AT-B- 348 814
FR-A- 2 165 078
FR-A- 2 289 109
US-A- 3 820 280
US-A- 4 058 930
US-A- 4 249 952**

(56) References cited:
**CHEMICAL ABSTRACTS, vol. 68, 1968, page 6947, abstract no. 71858a, B.I. NUDEL'MAN et al.: "Preparation of quality standardized potassium fertilizers during the production of a portland cement clinker by means of chlorination roasting", & DOKL. AKAD. NAUK. UZB. SSR 24(10), 30-1(1967)**

(73) Proprietor: **Nagamatsu, Mutuo
33-4, Kasumigaoka 4-chome Higashi-ku
Fukuoka-shi (JP)**

(72) Inventor: **Nagamatsu, Mutuo
33-4, Kasumigaoka 4-chome Higashi-ku
Fukuoka-shi (JP)**

(74) Representative: **Henkel, Feiler, Hänzel &
Partner
Möhlstrasse 37
W-8000 München 80 (DE)**

## Description

The present invention relates to a box for cultivating plants of the kind defined by the pre-characterizing features of the claim 1.

Owing to the remarkable progress of urbanization, most of the buildings in the cities and towns are made of the concrete-made buildings with flat concrete roofs.

The roofs of such buildings, however, have the grey rough surfaces thereof exposed so at the bird-eye view of the city is almost painted in grey. Furthermore, such roofs have not been used for any useful purposes.

Although some buildings utilize the roofs thereof for small playlands or leisure areas, such roofs still have following problems.

Namely, in summer, the temperature of the surface of the roof rises up to 50 to 70°C at noon due to the heat energy from the sun and the roof can hardly be used for the playland or the leisure area.

Furthermore, besides the roof of the building, the rooms located right below the roof become hot due to the radiation or conduction of the heat energy of sun through the roof so that the air conditioning for cooling the rooms cannot cool the room sufficiently and the users of the rooms suffer a discomfort.

To the contrary, in winter, since such roof made of concrete exclusively has a poor insulation, the heat energy of the rooms right below the roof escapes rapidly through the roof wall so that the heating system cannot warm the room sufficiently resulting the increase of cost for heating.

For resolving above detects of such roofs, people have tried to make the roof being full of natural greenery. Such scheme has not been realized, however, since several problems such as the increase of the weight of the roof, water drainage, the weight of people standing on the roof or the possibility of plant cultivation on the concretemade roof have not been resolved.

Accordingly, the installation of artificial turfs on the roof has been realized for providing greenery on the roof.

The artificial turfs, however, absorb and preserve the heat energy from the sun, the roof becomes extremely hot and gives a discomfort to the people on the roof. Furthermore, the dust gradually accumulates between turfs and such dust cannot be removed easily so that the roof becomes unsanitary and the color of the turfs is faded.

Furthermore, the temperature of the surface of the concrete-made roof differs sharply between summer and winter at a level of about 70°C so that the concrete-made roof expands and contracts sharply giving rise to cracks on the roof and such cracks cause a roof leakage which brings about damage on household goods such as wardrobes or the uneasy sound of feet of people walking on the roof penetrates the roof and echos in the rooms right below the roof of the building.

A plant box of the kind defined at the preamble is known from the FR-A-2 289 109. This known box is comprised of a plurality of frame structures, which, before installing the plant box on a roof of a building, for example, have to be assembled in a relatively cumbersome manner. Further, upon assembling the box body, an impermeable joint has to be inserted between vertical parts of the hollow ridges, which ridges are so low and have the water drainage apertures formed at the base portion thereof so that water cannot be retained sufficiently. Accordingly, it is necessary to supply water frequently. Finally, since the apertures are separated by the ridges, uniform discharging of water through the box body cannot be obtained.

Accordingly, it is the object of the present invention to provide a box for cultivating plant of the kind defined at the preamble which can be easily produced and handled and which allows optimal watering of the plant filled therein.

This object is attained by the characterizing features of the claim 1. Advantageous embodiments are given by the features of the subclaims.

In accordance with the invention, easy production of the plant box as well as easy handling thereof is attained by the integral construction thereof, including an integral construction of the hollow ridges. Optimal watering is attained, in accordance with the invention, by providing the hollow ridges with a sufficient height to reach a position below the root of the plant planted in the soil and by providing the water drainage apertures on the top wall thereof.

More particularly, due to the suffient height of the hollow ridges, a sufficient amount of water can be retained in the box body so that water is fed to the plant for a considerably long period while preventing deterioration of the root of the plant which may be caused by immersing of the roots in water.

Due to the provision of the water drainage apertures on the top wall of the hollow ridges a sufficient amount of water can be retained in the box body so that water is fed to the plant for a considerably long period while preventing deterioration of the the root of the plant which may be caused by immerging of the roots in water. Furthermore, water to be discharged, which is deposed at both sides of the hollow ridges, can be discharged uniformly through the apertures on the top thereof.

Fig. 1 is a perspective view of a box for cultivating plant of the present invention.

Fig. 2 is a cross sectional view of the box taken along the line I-I of Fig. 1.

Fig. 3 is a cross sectional view of the box taken along the line I-I of Fig. 1, wherein the box is filled with the soil for cultivating plant.

Fig. 4 is a perspective view of a roof of a building where a plurality of boxes for cultivating plant are installed for making the roof greenery.

The present invention is hereinafter disclosed in detail in conjunction with the attached drawings.

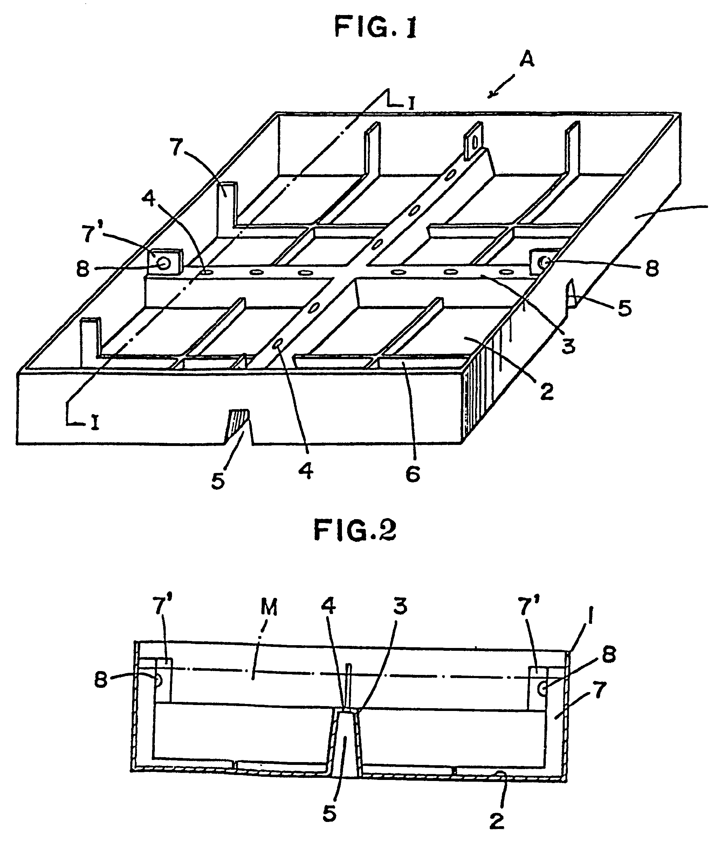

In Fig. 1, A indicates a box for cultivating plant and such box A is preferably made of a material which is resistant to corrosion such as plastic, light-weighted-alloy such as aluminum, ceramic, or fiberreinforced porcelain.

As shown in Fig. 1 and Fig. 2, around the periphery of the rectangular bottom plate 2, a peripheral wall 1 is integrally connected and a plurality of hollow ridges 3 are provided on the upper surface of the bottom plate 2 in a cross form and such hollow ridges 3 have the upper surface thereof disposed below the upper end of the peripheral wall 1.

The hollow ridges 3 have a hollow trapezoidal cross section and a plurality of water drainage apertures 4 are formed in the upper surface of the hollow ridges 3. Furthermore, below or on the rear surface of the hollow ridges 3, water drainage grooves 5 which have the same cross section as that of the hollow ridges 3 are formed.

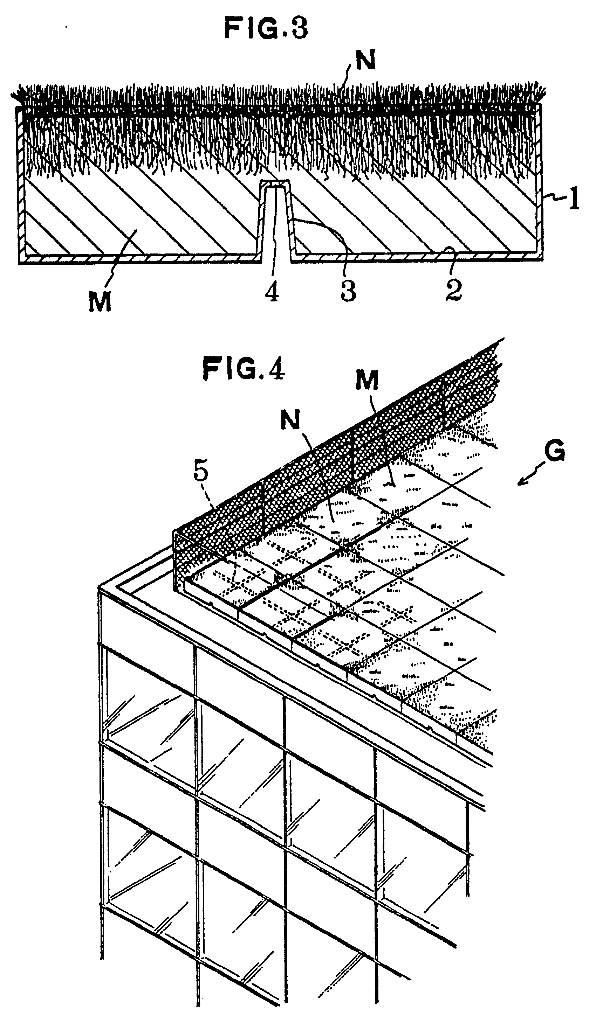

Due to such construction, as shown in Fig. 3, when the soil M for cultivating plant is filled in the box A, the water contained in the upper part of the soil M is discharged into the water drainage groove 5 through water drainage apertures 4, while the water contained in the lower part of the soil M is prevented from draining through the apertures 4.

Accordingly, the hollow ridges 3 works as a reinforcing rib of the box A as well as a means for draining water from the box A.

Furthermore, in Fig. 1, numeral 6 indicates a plurality of reinforcing ribs formed in a cross shape in each space of the box defined by hollow ridges 3, while numeral 7 indicates a plurality of auxiliary reinforcing ribs reinforcing the connection between the hollow ridges 3 and reinforcing ribs 6.

Numeral 8 indicates a hook opening in which a hook for suspending and transporting the box A can be engaged.

In Fig. 4, a roof garden created by using the boxes A for cultivating the plant of this invention.

On the surface of the roof G of the concrete-made building, a multiplicity of boxes A for cultivating the plant are mounted laterally and longitudinally to cover the surface of the roof G.

In each box A, the soil M for cultivating the plant is filled and natural turfs N are planted on the soil M.

Such natural turfs N can decompose or corrupt the dusts by bacteria and use the decomposed material as its own nutritious source to make themselves always fresh.

The boxes in which the soil M for cultivating the plant is filled can be mounted on veranda or asphalt roof and are also utilized for horticulture.

The manner in which the plants such as turfs N are cultivated by using the above mentioned boxes A is hereinafter explained.

For cultivating turfs N on the roof G of the building, the boxes A in which turfs N are planted are mounted on the roof G.

Since the soil M for cultivating plant is filled in the boxes A in such a manner that the upper surface of the soil M is above the upper surface of the soil M, the hollow ridges 3 are embedded in the soil M. Accordingly, the part of the water contained in the soil M above the water discharge apertures 4 formed on the hollow ridges 3 is discharged into the water discharge groove 5, while the part of the water contained in the soil M below the water discharge apertures 4 is held or reserved in the boxes A. Since the water discharge apertures 4 have a small diameter, the discharge of soil M through the aperture 4 can be effectively prevented.

Accordingly, the boxes A can promote the water reserving function as well as water discharge function which are both inevitable for cultivating plants.

Therefore, water evaporation from the boxes A by the direct sunbeams can be effectively prevented. Even at noon in summer, it becomes unnecessary to supply water to the boxes A for a week and also it becomes unnecessary to supply water at all from the midst of September to the beginning of the rainy season in Japan.

Furthermore, when the boxes A are mounted on the roof such that the boxes A abut each other laterally and longitudinally, the water discharge grooves 5 of respective boxes A are aligned each other forming elongated water discharge channels which lead to a water drainage pipe provided on the periphery of the roof G so that the drainage of water is rapidly and smoothly effected.

To recapitulate the feature of the present invention, the soil M for cultivating plant is filled in the boxes A for cultivating plant by a predetermined thickness (for example, 10 cm) and the turfs N are cultivated on the surface of the soil M. Since the hollow ridges 3 are disposed below the peripheral wall 1 and the water discharge apertures 4 and water discharge grooves 5 are formed in the upper and lower side of the hollow ridges 3. Accordingly, the water discharge and water reserve are both promoted bringing about following effects. Namely, since the turfs N are free from the excessive amount of water and receive an appropriate amount of water, the corrosion of the root of the turfs N as well as the corrosion of the concrete can be prevented, Simultaneously, since the appropriate amount of water is reserved in the boxes A by the water reserve function, the withering of the turfs N can be also prevented.

Accordingly, the cultivation of the turfs N can be promoted with the boxes A of the present invention. Furthemore, by the installation or mounting of such boxes A on the roof G of the building, the soil M for cultivating plant and the turfs N provide a heat insulating function, a sound insulating function and a vibration preventing function.

Furthermore, the maintenance of the turfs N can be conducted in a conventional manner for ordinary turfs.

Still furthermore, the turfs N are effective for energy saving from the architectural point by the heat insulation, the greenery environment from the point of urbanization, the utilisation of roof for promotion of physical and mental health, the utilization of land, the easing of stepping pressure while walking on the roof.

Conventional roof is provided with a water proof layer on a concrete substrate and a protective concrete layer (thickness 6 to 12 cm) on the water proof layer. In this invention, since the boxes A for cultivating plant works as the protective concrete layer, such protective concrete layer can be eliminated thus decreasing the thickness of the roof, accordingly, the weight of the roof can be decreased at a level of 120 to 200 kg/ m². Furthermore, even when the surface of the roof is held rough, the boxes A work as protective layer for preventing the deterioration of the roof by the heat energy of sunbeams.

The present invention is also characterized by the soil M for cultivating plant which is filled in the boxes A for cultivating plant.

Namely, in this embodiment, the soil M for cultivating plant is preferably made of a mixture comprising clinker ash, pearlite equivalent, organic fertilizer and water retaining agent.

Clinker ash is an industrial waste produced at the blast furnace or steam power generating station using coal as fuel and such ash has a specific weight of about 0,95 t/ m² and therefore is light-weighted and can be obtained in an inexpensive manner. Furthermore, since the ash has similar property as the sand-containing, it has an excellent water permeabilty compared as ordinary soils and can be sufficiently used as an alternative for conventional soils for cultivating plant.

Pearlite is a material produced by crushing quartzite and burning such crushed quartzite and such pearlite is light-weighted and has an excellent water retaining ability,

Organic fertilizer can be classified to leaf mold or peat moss, organic material produced from rice straws or chaffs and manure heap produced from bark-oriented organic material.

Such organic fertilizer is used not only for supplying nutritions to the plant such as turfs but also for lowering hydrogen coefficient of the strong-alkali clinker ash from pH 8.5 to pH 10.

Peat moss is most suitable as the organic fertilizer.

Although the desirable hydrogen coefficient for cultivating plant is pH 3.5 to 8.5, since clinker ash needs 7 to 10 years for decreasing the hydrogen coeffcient from pH 8.5 to pH 4 to 5, clinker ash can be effectively used for more than 10 years continuously.

Water retaining agent preferably is the one which has an excellent water retaining ability. As such agent, IGEDAGEL GREEN (a registered Japanese trade mark) which is produced by SUMITOMO CHEMICAL CO., LTD of JAPAN and is a high-molecular compound comprising carboxyl (COO) and hydrooxide.

The soil M for cultivating plant is preferably produced by mixing above-mentioned materials at following mixing ratio.

Namely, about 80% of clinker ash, about 10% of pearlite equivalent and about 10% of organic fertilizer and if desired, a small amount of the water retaining agent are mixed together to produce the soil M having a specific weight of about 0.8 t/m².

The specific weight of the soil M is adjusted by varying the mixing amount of the clinker ash so that the weight of the boxes A which are mounted on the roof can be restricted sufficiently below the allowable weight limit that the roof can withstand.

It is also possible to adjust the mixing ratio of other materials such as pearlite equivalent or the organic fertilizer depending on the kind of the plant to be cultivated.

A following chart shows the comparison of specific weights of the conventional soil for cultivating plant, the clinker ash and the soil M of the present invention.

| kind | specific weight (t/ m²) |
|---|---|
| conventional soil (sand soil) for cultivating plant | 1.80 |
| sand | 2.30 |
| gravel | 2.40 |
| clinker ash | 0.95 |
| soil M for cultivating plant | 0.80 |

The soil M for cultivating the plant is filled in the box A as shown in Fig. 3 until the thickness of the soil M is about 10 cm and the turfs N are planted on the surface of the soil M.

In general, the cultivating of the plant on the roof of the building must meet following conditions.

① the soil must be light-weighted (the specific weight being the specific weight of water).

② the soil must have a sufficient water retaining ability.

③ the soil must have a reasonable water draining ability.

④ the soil must withstand the pressure of the feet even in rain.

⑤ the soil must cultivate the plant for a long period.

The soil M for cultivating plant can meet all of the above conditions,

Namely, the soil M for cultivating plant is substantially comprised of the clinker ash which has the specific weight (0,95 kg/m³) far smaller than the specific weight (1.6 kg/m³ to 1.9 kg/m³) of the conventional soil for cultivating plant. Furthermore, the clinker ash has a better water permeability than the conventional soil for cultivating plant.

Accordingly, the specific weight of the soil M can be lowered to about 0.8 t/m², while the water drainage ability of the soil M can be maintained at a suitable level.

Furthermore, by the inclusion of the light-weighted organic fertilizer, the nature of the clinker ash is changed from strong alkali to weak alkari which is suitable for cultivating plant.

Still furthermore, pearlite equivalent which is light-weighted and has an excellent water retaining ability can bring about a favorable water retaining function to the soil M coupled with the effect of the water retaining agent so that is becomes unnecessary to supply water to the soil M frequently as in the case of the conventional soil.

In this manner, since the specific weight of the soil M can be reduced to about 0.8 t/m², the box A for cultivating plant can be restricted to less than 120 kg/m² when the soil M is filled in the box A.

Furthermore, since the soil for cultivating turfs N is made of the soil M for cultivating plant which is light-weighted and has a favorable water drainage ability and a suitable nutrition and water retaining ability and can withstand the feet pressure of a man walking on the turfs N, the boxes A can be mounted on the roof G without violating any laws restricting the weight of objects to be mounted on the roof G. The soil M can also provides a cushion function to the man walking on the roof, and protect the water-proof layer of the roof from the sunbeams.

Furthermore, since the boxes A or the soil M can retain the water on a rainy day, it becomes unnecessary to supply water to the turfs frequently facilitating the maintenance of the turfs N as well as the saving of water.

Furthermore, since the main material of the soil M is the clinker ash, the soil M can be produced cheaply making use of the clinker ash which is the industrial waste.

Still furthermore, since the roof, veranda and terrace can be made greenery, following advantages are acheived, namely, the considerable energy saving from the architectural point by the effective heat insulation, the maximum utilization of land by making the roof being 100% greenery, greenery environment from the point of urbanization, the alleviation of the deserting of the cities, the promotion of physical and mental health, the utilization of land, the easing of stepping pressure while walking on the roof which assure the humane life such as the sun-shower on the natural turfs even in urban cities.

## Claims

1. A box (A) for cultivating plants, comprising
a rectangular-shaped box body made of a rectangular bottom plate (2) and four circumferential walls (1) connected to the periphery of said bottom plate (2),
hollow ridges (3) provided on and extending upwardly from the upper surface of the bottom plate (2), said hollow ridges (3) having the top surfaces thereof disposed below the upper end rim of the circumferential walls (1) of the box body and being provided with a plurality of water drainage apertures (4) communicating with water drainage grooves (5) defined within the hollow ridges (3) and
a soil (M) for cultivating plants which soil is filled in the box body,
characterized
in that said box body is made of an integral unit case integrally connecting the four circumferential walls and the bottom plate (2),
in that said hollow ridges (3) have an inverse-U-shaped cross sectional contour consisting of a pair of substantially vertical upright walls and a top wall which bridges the upper ends of said vertical upright walls,
in that said hollow ridges (3) are integrally formed with said bottom plate (2) by elevating a part of said bottom plate (2),
in that the water drainage apertures (4) of the hollow ridges (3) are provided on the top wall thereof.

2. The box (A) for cultivating plants according to claim 1, wherein said soil (M) for cultivating plants is a mixture essentially consisting of clinker ash and organic fertilizer.

3. The box (A) for cultivating plants according to claim 1 or 2, wherein a plurality of said boxes (A) for cultivating plants are adapted to be arranged on a roof (G) such that said water drainage grooves (5) of each box (A) become in alignment with said water drainage grooves (5) of laterally and longitudinally adjacent or neighboring boxes (A) to form water discharge channels which lead to a water drainage pipe on said roof (G).

## Ansprüche

1. Kübel bzw. Kasten (A) für die Pflanzenkultur, umfassend
einen rechteckförmigen Kastenkörper aus einer rechteckigen Bodenplatte (2) und vier mit dem Umfang der Bodenplatte (2) verbundenen Umfangswänden (1),
an der Oberseite der Bodenplatte (2) vorgesehene und von ihr nach oben ragende hohle Rippen (3), wobei die hohlen Rippen (3) mit ihren Oberseiten unterhalb der oberen Endkante der Umfangswände (1) des Kastenkörpers liegen und mit einer Anzahl von Wasserabflußöffnungen (4) versehen sind, die mit innerhalb der hohlen Rippen (3) festgelegten Wasserabflußrillen (5) in Verbindung stehen, und
in den Kastenkörper eingefülltes Erdreich (M) zum Kultivieren von Pflanzen, dadurch gekennzeichnet,
daß der Kastenkörper aus einer einstückigen oder materialeinheitlichen Gehäuseeinheit, bei welcher die vier Umfangswände materialeinheitlich mit der Bodenplatte (2) verbunden sind, geformt ist,
daß die hohen Rippen (3) einen umgekehrt U-förmigen Querschnitt aus zwei im wesentlichen lotrecht hochstehenden Wänden und einer die oberen Enden der lotrecht hochstehenden Wände überbrückenden oberen Wand aufweisen,
daß die hohlen Rippen (3) durch Hochziehen eines Teils der Bodenplatte (2) materialeinheitlich mit der Bodenplatte (2) geformt sind und
daß die Wasserabflußöffnungen (4) der hohlen Rippen (3) in deren oberen Wänden vorgesehen sind.

2. Kübel bzw. Kasten (A) für die Pflanzenkultur nach Anspruch 1, dadurch gekennzeichnet, daß das Erdreich (M) zum Kultivieren von Pflanzen ein im wesentlichen aus Klinkerasche und aus organischem Dünger bestehendes Gemisch ist.

3. Kübel bzw. Kasten (A) für die Pflanzenkultur nach Anspruch 1 oder 2, dadurch gekennzeichnet, daß eine Anzahl von Kübeln bzw. Kästen (A) für die Pflanzenkultur auf einem Dach (G) so angeordnet werden können, daß die Wasserabflußrillen (5) jedes Kübels bzw. Kastens (A) mit den Wasserabflußrillen (5) von seitlich oder in Längsrichtung benachbarten Kübeln bzw. Kästen (A) unter Bildung von Wasserabflußkanälen, die zu einem Wasserabflußrohr am Dach (G) führen, fluchten.

## Revendications

1. Une boîte (A) pour la culture de plantes, comportant
un corps de boîte de forme rectangulaire constitué par une plaque de fond rectangulaire (2) et quatre parois circonférencielles (1) reliées à la périphérie de ladite plaque de fond (2),

des nervures creuses (3) prévues sur la surface supérieure de la plaque de fond (2) et s'étendant vers le haut à partir de celle-ci, lesdites nervures creuses (3) ayant leurs surfaces supérieures disposées au-dessous du bord extrême supérieur des parois circonférencielles (1) du corps de boîte et étant munies d'une pluralité d'ouvertures (4) de drainage d'eau communiquant avec des gorges (5) de drainage d'eau qui sont définies à l'intérieur des nervures creuses (3), et

de la terre (M) pour la culture des plantes, cette terre étant placée dans le corps de boîte, caractérisée

en ce que ledit corps de boîte est constitué par un réceptacle d'une seule pièce reliant les quatre parois circonférencielles et la plaque de fond (2),

en ce que lesdites nervures creuses (3) présentent une forme en section droite en U renversé constitué par deux parois sensiblement verticales et une paroi supérieure qui relie les extrémités supérieures desdites parois verticales,

en ce que lesdites nervures creuses (3) sont formées d'une seule pièce avec ladite plaque de fond (2) par soulèvement d'une partie de ladite plaque de fond (2), et

en ce que les ouvertures (4) de drainage d'eau des nervures creuses (3) sont ménagées dans la paroi supérieure de celles-ci.

2. La boîte (A) pour la culture de plantes selon la revendication (1), dans laquelle ladite terre (M) pour cultiver des plantes est un mélange constitué essentiellement de cendre de scories et d'un fertilisant organique.

3. La boîte (A) pour la culture de plantes selon la revendication 1 ou 2, dans laquelle une pluralité desdites boîtes (A) pour cultiver des plantes sont agencées pour être disposées sur un toit (G) de sorte que lesdites gorges (5) de drainage d'eau de chaque boîte (A), viennent en alignement avec lesdites gorges (5) de drainage d'eau des boîtes (A) latéralement ou longitudinalement adjacentes ou voisines pour former des canaux d'évacuation d'eau qui mènent à une conduite de drainage d'eau du toit (G).

# FIG. 1

# FIG.2

# FIG.3

# FIG.4